(19) Europäisches Patentamt
European Patent Office
Office européen des brevets

(11) Publication number: 0 191 212 B1

(12) **EUROPEAN PATENT SPECIFICATION**

(45) Date of publication of patent specification: **06.09.89**

(51) Int. Cl.[4]: **B 01 J 29/06,** C 10 G 11/05

(21) Application number: **85301039.5**

(22) Date of filing: **15.02.85**

(54) **Modification of zeolites with ammonium fluoride.**

(43) Date of publication of application:
**20.08.86 Bulletin 86/34**

(45) Publication of the grant of the patent:
**06.09.89 Bulletin 89/36**

(84) Designated Contracting States:
**AT BE DE FR GB IT NL SE**

(56) References cited:
**DE-A-3 207 278**
**US-A-3 594 331**
**US-A-3 933 983**
**US-A-4 073 865**
**US-A-4 361 713**
**US-A-4 427 786**

(73) Proprietor: **MOBIL OIL CORPORATION**
**150 East 42nd Street**
**New York New York 10017 (US)**

(72) Inventor: **Rosinski, Edward Joseph**
**Box A**
**Pedricktown New Jersey 08067 (US)**

(74) Representative: **Carpmael, John William Maurice et al**
**CARPMAELS & RANSFORD 43 Bloomsbury Square**
**London, WC1A 2RA (GB)**

EP 0 191 212 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a method for enhancing the shape selectivity and altering acid activity of porous crystalline zeolites, including high silica-containing porous crystalline zeolite materials.

Zeolitic materials, both natural and synthetic, have been demonstrated in the past to have catalytic properties for various types of hydrocarbon conversions. Certain zeolitic materials are ordered, porous crystalline aluminosilicates having a definite crystalline structure within which there are a large number of smaller cavities which may be interconnected by a number of still smaller channels. Since the dimensions of these pores are such as to accept for adsorption molecules of certain dimensions while rejecting those of larger dimensions, these materials have come to be known as "molecular sieves" and are utilized in a variety of ways to take advantage of these properties.

Such molecular sieves, both natural and synthetic, include a wide variety of positive ion-containing crystalline aluminosilicates. These aluminosilicates can be described as a rigid three-dimensional framework $SiO_4$ and $AlO_4$ in which the tetrahedra are cross-linked by the sharing of oxygen atoms whereby the ratio of the total aluminum and silicon atoms to oxygen is 1:2. The electrovalence of the tetrahedra containing aluminum is balanced by the inclusion in the crystal of a cation, for example, an alkali metal or an alkaline earth metal cation. This can be expressed wherein the ratio of aluminum to the number of various cations, such as Ca/2, Sr/2, Na, K or Li is equal to unity. One type of cation may be exchanged either entirely or partially by another type of cation utilizing ion exchange techniques in a conventional manner. By means of such cation exchange, it has been possible to vary the properties of a given aluminosilicate by suitable selection of the cation. The spaces between the tetrahedra are occupied by molecules of water prior to dehydration.

Prior art techniques have resulted in the formation of a great variety of synthetic aluminosilicates. These aluminosilicates have come to be designated convenient symbols, as illustrated by zeolite ZSM-5 (U.S. Patent 3,702,886).

High silica-containing zeolites are well known in the art, and it is generally accepted that the ion exchange capacity of the crystalline zeolite is directly dependent on its aluminum content. Thus, for example, the more aluminum there is in a crystalline structure, the more cations are required to balance the electronegativity thereof, and when such cations are of the acidic type such as hydrogen, they impart tremendous catalytic activity to the crystalline material. On the other hand, high silica-containing zeolites having little or substantially no aluminum, have many important properties and characteristics and a high degree of structural stability such that they have become candidates for use in various processes including catalytic processes. Materials of this type are known in the art and include high silica-containing aluminosilicates such as ZSM-5, ZSM-11 (U.S. Patent 3,709,979), and ZSM-12 (U.S. Patent 3,832,449) to mention a few.

The silica-to-alumina ratio of a given zeolite is often variable; for example, zeolite X (U.S. Patent 2,882,244) can be synthesized with a silica-to-alumina ratio of from 2 to 3; zeolite Y (U.S. Patent 3,130,007) from 3 to about 6. In some zeolites, the upper limit of silica-to-alumina ratio is virtually unbounded. Zeolite ZSM-5 is one such material wherein the silica-to-alumina ratio is at least 5. U.S. Patent 3,941,871 discloses a crystalline metal organo silicate essentially free of aluminum and exhibiting an x-ray diffraction pattern characteristic of ZSM-5 type aluminosilicate. U.S. Patents 4,061,724; 4,073,865 and 4,104,294 describe microporous crystalline silicas or organo silicates wherein the aluminum content present is at impurity levels.

Because of the extremely low aluminum content of these high silica-containing zeolites, their ion exchange capacity is not as great as materials with a higher aluminum content. Therefore, when these materials are contacted with an acidic solution and thereafter are processed in a conventional manner, they are not as catalytically active as their higher aluminum-containing counterparts.

The novel method of this invention permits the preparation of certain high silica-containing materials which have all the desirable properties inherently possessed by such high silica materials and, yet, which have an enhanced propensity for rejection of larger molecules, e.g., cyclohexane over normal hexane, thus imparting a greater degree of shape selectivity to the zeolite catalyst. In addition if catalysts of reduced activity are desired, then calcination in the presence of controlled amounts of $NH_4F$ leads to catalysts having adjusted activity required for some applications.

It is noted that U.S. Patents 3,354,078 and 3,644,220 relate to treating crystalline aluminosilicates with volatile metal halides. Neither of these latter patents is, however, concerned with treatment of crystalline materials having a high silica-to-alumina mole ratio or with treatment of any crystalline zeolite with ammonium fluorides in the present manner. US—A—3933983 discloses the treatment of a porous crystalline zeolite with an aqueous solution of ammonium fluoride and subsequent calcination in order to increase the thermal stability of the obtained product. The quantity of fluorine incorporated into the zeolite is less than the 1% wt required according to the invention.

The present invention provides a method for enhancing the shape selectivity of a porous crystalline zeolite which comprises:

a) impregnating the zeolite with an aqueous solution of ammonium fluoride in the absence of a source of aluminium, and

b) converting the fluoride-treated zeolite to the hydrogen form.

The present invention also provides for catalysts prepared in this manner and to porous crystalline zeolites which have been reduced in activity by treatment with ammonium fluoride followed by calcination such that catalytic activity of the zeolite diminishes from an alpha value greater than 100 to an alpha value of less than 10 or from an alpha value greater than 500 to an alpha value of less than 400.

The present invention also provides a process for organic compound conversion comprising contacting an organic compound under conversion conditions with a catalyst comprising a porous crystalline zeolite treated in accordance with the method of the present invention. Such a conversion process can include a process for cracking a hydrocarbon feedstock under hydrocarbon cracking conditions with a catalyst comprising a porous crystalline zeolite treated in accordance with the method of the present invention.

The novel method of this invention is concerned with the treatment of crystalline zeolites, including high silica-containing crystalline zeolite material. The expression "high silica-containing crystalline zeolite material" is intended to define a crystalline structure which has a silica-to-alumina ratio greater than 100 and more preferably greater than 500, up to and including those highly siliceous materials where the silica-to-alumina ratio is infinity or as reasonably close to infinity as practically possible. This latter group of highly siliceous materials is exemplified by U.S. Patents 3,941,871; 4,061,724; 4,073,865 and 4,104,294 wherein the materials are prepared from reaction solutions which involve no deliberate addition of aluminum. However, trace quantities of aluminum are usually present due to the impurity of the reaction solutions. It is to be understood that the expression "high silica-containing crystalline zeolite material" also specifically includes those materials which have other metals besides silica and/or alumina associated therewith, such as boron, iron, chromium, etc. Thus, the starting materials utilized in the novel method of this invention may have a silica-to-alumina ratio greater than about 10 (irrespective of what other materials or metals are present in the crystal structure).

The novel zeolite treatment method of this invention is simple and easy to carry out. Ordinarily it will be desirable first to calcine the zeolite, e.g. a high silica zeolite, at temperatures of from about 300°C to 900°C, e.g. for about 10 hours at about 540°C, in an oxygen-containing gas such as air. The crystalline zeolite is then impregnated with an aqueous ammonium fluoride solution in an amount such as to provide at least 1% of fluorine by weight of the zeolite. Preferably the impregnation is conducted in the absence of a source of aluminum (other than any aluminum in the zeolite) particularly in the absence of an alumina binder. The impregnation is conveniently conducted at a temperature of from 0°C to 150°C, preferably from 82°C to 110°C, preferably over a period of 4—24 hours. The impregnated zeolite optionally is then water washed and is then again calcined at a temperature of 300°C to 900°C. If the zeolite originally was a sodium zeolite, it is then preferably ion exchanged with an aqueous solution of ammonium salt such as ammonium chloride, ammonium sulfate, ammonium nitrate or mixtures thereof and calcined again at a temperature of 300°C to 900°C. It is desirable to select the ammonium fluoride and ammonium salt solutions so that the final treated zeolite product will have a ammonium fluoride concentration which is the equivalent of at least 1 percent by weight of fluorine, more preferably up to 20 percent by weight of fluorine.

Of the high silica zeolite materials advantageously treated in accordance herewith, zeolites ZSM-5, ZSM-11, ZSM-12, ZSM-23, ZSM-35, ZSM-38, ZSM-48 and beta are particularly noted. ZSM-5 is described in U.S. patents 3,702,886 and Re 29,948. ZSM-11 is described in U.S. Patent 3,709,979. ZSM-12 is described in U.S. Patent 3,832,449. ZSM-23 is described in U.S. Patent 4,076,842. U.S. Patents 4,016,245 and 4,046,859 describe ZSM-35 and ZSM-38 respectively. ZSM-48 is more particularly described in U.S. Patent Application Serial No. 343,131, filed January 27, 1982. Zeolite beta is described in U.S. Patent 3,308,069.

ZSM-48 can be identified, in terms of moles of anhydrous oxides per 100 moles of silica as follows:

$$(0.05 \text{ to } 5)\ N_2O:(0.1 \text{ to } 10)\ M_{2/n}O:(0 \text{ to } 4)\ Al_2O_3:(100)\ SiO_2$$

wherein M is at least one cation having a valence n, N is a mixture of a $C_2$—$C_{12}$, and more preferably of a $C_3$—$C_5$, alkylamine and a tetramethylammonium compound and wherein the composition is characterized by the distinctive X-ray diffraction pattern as shown below:

Characteristics lines of zeolite ZSM-48

| d (Å) | Relative intensity ($I/I_o$) |
|---|---|
| 11.8±0.2 | S |
| 10.2±0.2 | W—M |
| 7.2±0.15 | W |
| 4.2±0.08 | VS |
| 3.9±0.08 | VS |
| 3.6±0.06 | W |
| 3.1±0.05 | W |
| 2.85±0.05 | W |

These values were determined by standard techniques. The radiation was the K-alpha doublet of copper, and a diffractometer equipped with a scintillation counter and a strip chart pen recorder was used. The peak heights, I, and the positions as a function of two times theta, where theta is the Bragg angle, were read from the spectrometer chart. From these, the relative intensities, 100 $I/I_o$, where $I_o$ is the intensity of the strongest line or peak, and d (obs.), the interplanar spacing in Angstroms (Å) corresponding to the recorded lines, were calculated. In the foregoing table the relative intensities are given in terms of the symbols W=weak, VS=very strong, M=medium and W—M=weak-to-medium (depending on the cationic form). Ion exchange of the sodium ion with cations reveals substantially the same pattern with some minor shifts in interplanar spacing and variation in relative intensity. Other minor variations can occur depending on the silicon to aluminum ratio of the particular sample, as well as if it has been subjected to thermal treatment.

ZSM-48 can be prepared from a reaction mixture containing a source of silica, tetramethylammonium compound, $C_2$—$C_{12}$ alkylamine, an alkali metal oxide, e.g. sodium, with or without a source of alumina, and water, and having a composition, in terms of mole ratios of oxides, falling within the following ranges:

| Reactants | Broad | Preferred |
|---|---|---|
| $Al_2O_3/SiO_2$ | 0 to 0.08 | 0 to 0.02 |
| $Na_2O/SiO_2$ | 0.01 to 1.0 | 0.1 to 0.5 |
| $N_2O/SiO_2$ | 0.005 to 0.5 | 0.005 to 0.25 |
| $OH^-/SiO_2$ | 0.01 to 0.5 | 0.05 to 0.2 |
| $H_2O/SiO_2$ | 10 to 200 | 20 to 100 |

wherein N is a mixture of a $C_2$—$C_{12}$ alkylamine tetramethylammonium compound, and maintaining the mixture at 80—200°C until crystals of ZSM-48 are formed.

The molar ratio of $C_2$—$C_{12}$ alkylamine to tetramethylammonium compound is not narrowly critical and can range from 1:1 to 10:1. The tetramethylammonium compound can include the hydroxide or halide with the chloride being particularly preferred.

The silica/alumina mole ratio of ZSM-48 can be as low as 12 and extend to an infinite number.

The original cations of ZSM-48 can be replaced, at least in part, by calcination and/or ion exchange with another cation. Thus, the original cations are exchanged into a hydrogen or hydrogen ion precursor form or a form in which the original cation has been replaced by a metal of Groups II through VIII of the Periodic Table. Thus, for example, it is contemplated that the original cations can be replaced with ammonium ions or with hydronium ions. Catalytically active forms of these would include, in particular, hydrogen, rare earth metals, aluminum, metals of Groups II and VIII of the Periodic Table and manganese and combinations of metal and hydrogen.

The zeolite materials of enhanced selectivity as prepared by the present method are useful as catalyst components in processes involving selective modification of straight chain components in organic compound conversion, e.g. in cracking and polymerization reactions. In practicing a particularly desired conversion process, it may be useful to incorporate the above-described zeolite material of enhanced selectivity with a matrix comprising a material resistant to the temperature and other conditions employed in such a process. Such matrix material is useful as a binder and imparts resistance to the catalyst for the

severe temperature, pressure and reactant feed stream velocity conditions encountered in many conversion processes.

Useful matrix materials include both synthetic and naturally occurring substances, as well as inorganic materials such as clay, silica and/or metal oxides. The latter may be either naturally occurring or in the form of gelatinous precipitates or gels including mixtures of silica and metal oxides. Naturally occurring clays which can be composited with the zeolite include those of the montmorillonite and kaolin families, which families include the sub-bentonites and the kaolins commonly known as Dixie, McNamee, Georgia and Florida clays or others in which the main mineral constituent is halloysite, kaolinite, dickite, nacrite or anauxite. Such clays can be used in the raw state as originally mined or initially subjected to calcination, acid treatment or chemical modification.

In addition to the foregoing matrix materials, the catalyst employed herein may be composited with a porous matrix material such as alumina, silica-alumina, silica-magnesia, silica-zirconia, silica-thoria, silica-beryllia, and silica-titania, as well as ternary compositions, such as silica-alumina-thoria, silica-alumina-zirconia, silica-alumina-magnesia and silica-magnesia-zirconia. The matrix may be in the form of a cogel. The relative proportions of zeolite component and matrix, on an anhydrous basis, may vary widely with the selectivated zeolite content ranging from about 1 to about 99 percent by weight and more usually in the range of about 5 to about 80 percent by weight of the total dry composite.

The following examples will illustrate the novel method, compositions and conversion processes of the present invention.

Examples

In the following examples, fluoride treated zeolite samples were prepared by first calcining a high silica zeolite for 10 hours at about 540°C in air and then contacting it with an ammonium fluoride solution. Sufficient amount of water was used to dissolve the salt and to fill the pores of the zeolite. Depending on the amount of salt needed the ratio of grams of water per gram of zeolite varied from 0.5 to about 2. The salt solution was contacted with the air calcined powder in covered vessels for 4 to 24 hours at 82°C—110°C (180—230°F). The treated samples then were in some cases dried directly at 110°C (230°F) and then recalcined at about 540°C (1000°F) prior to the determination of physical and catalytic properties. Most of the samples were water washed after the $NH_4F$ treatment prior to drying at 110°C (230°F) and were calcined at about 540°C (1000°F). The $NH_4F$ treated sodium zeolites were also treated with $NH_4Cl$ to exchange the residual $Na^+$ with $NH_4$+ions. The samples then were water washed free of soluble salts and air calcined for 10 hours at about 540°C (1000°F). The specific treatments used with each example is given in each of the following Tables.

The sorption data used to determine shape selectivity changes were obtained as follows:

A weighed sample of the calcined zeolite was contacted with the desired pure absorbate vapor in an adsorptive changer, evacuated to 12 mm of mercury pressure when checking capacity for water and 20 mm of mercury when checking capacity for cyclohexane and n-hexane, pressure less than the vapor-liquid equilibrium pressures of the respective adsorbate at room temperature. The pressure was kept constant (within about ±0.5 mm Hg) by addition of adsorbate vapor controlled by a monstat during the adsorption period which did not exceed about 8 hours. As the adsorbate was adsorbed by the zeolite, the decrease in pressure caused the manostat to open a valve which admitted more adsorbate vapor to the chamber to restore the above control pressures. Sorption was completed when the pressure change was not sufficient to activate the manostat. The increase in weight was calculated as the adsorption capacity of the sample.

The shape selectivity determinations in the examples were calculated as the ratio of wt.% n-hexane capacity divided by the wt.% cyclohexane adsorbed. This ratio is used in discussing changes in the shape selective character of the treated zeolite exemplified and of the untreated starting material.

Also in the following examples, zeolite catalytic activity is measured by means of Alpha Values. As is known in the art, the Alpha Value is an approximate indication of the catalytic cracking activity of the catalyst compared to a standard catalyst, and is given as a relative rate constant (rate of normal hexane conversion per volume of catalyst per unit time). Alpha Value is based on the activity of the highly active silica-alumina cracking catalyst taken as an Alpha of 1. The Alpha Test is described in U.S. Patent 3,354,078 and in The Journal of Catalysis, Vol. IV, pp. 522—529 (August 1965).

Examples 1—6

In Examples 1—6 (Table 1) samples of a large crystal (2—5 μm) ZSM-5 zeolite were calcined at a temperature of about 540°C (1000°F) for a period of 10 hours in air. Each of the cooled calcined samples except samples 1 and 5 were then saturated (all pores were filled) with an aqueous solution of ammonium fluoride held for a period of 24 hours at 88°C—93°C (190—200°F). Each of the saturated samples was then contacted with water, dried at 110°C (230°F) and calcined for 10 hours at a temperature of about 540°C (1000°F) in air. The properties of the samples thus treated are reported in Table 1. Samples 2 and 3 subsequently were contacted with an aqueous solution of ammonium chloride, water washed, dried and calcined. The properties of these materials are also reported in Table 1.

Table 2 reports test runs 7 and 8 in which similar runs as in Table 1 were conducted on ZSM-5 zeolite of a smaller crystal size (0.02—0.05 μm). Tables 3 and 4 demonstrate the effect on the zeolite of varying the ammonium fluoride concentration. In Table 3 the concentration of ammonium fluoride in the treatment of

the process was 5, 10, and 20 wt.% corresponding to Examples 9, 10 and 11 and in Table 4; 2, 4 and 6 wt.% corresponding to Examples 12, 13 and 14. In Table 5, the effect of varying ammonium fluoride concentrations in treating a low sodium ZSM-5 catalyst is shown. The examples shown in Table 6 demonstrate the need for precalcination in air prior to the ammonium fluoride treatment. Examples 19, 20 and 21 were precalcined in nitrogen prior to the ammonium fluoride treatment and show that the catalyst is not affected by the ammonium fluoride treatment. This is shown by the shape selectivity-adsorption ratio of n-hexane over the cyclohexane which did not change, remaining about 2, even with the addition of as much as 10% F as ammonium fluoride. Examples 25, 26 and 27 show that water washing after the ammonium fluoride treatment and prior to calcination is beneficial for retaining the initial alpha activity. Here the alpha values after the ammonium fluoride treatment and subsequent exchange with ammonium chloride to reduce the residual sodium were 296, 284 and 279 for the catalyst treatment with 2, 5, 10 wt.% F, respectively. Examples 22, 23 and 24 which were not water washed prior to calcination had alpha values of 106, 17 and 4 for the samples treated with 1, 5, 10 wt.% F as ammonium fluoride. Presence of fluoride during the calcination at about 540°C (1000°F) reduces catalytic alpha activity. In some applications this is used advantageously.

The data presented in Table 7 demonstrate that alpha activity can be controlled in a ZSM-5 catalyst through the selection of the proper amount of ammonium fluoride treatment. In preparing these examples the sodium form of large crystal ZSM-5 was treated with 0.5, 1.0 and 2 wt.% fluorine as ammonium fluoride, was water washed, dried at 110°C (230°F) and then calcined at about 540°C (1000°F) prior to being evaluated as a catalyst. It is apparent from the shape selectivity ratio that the adsorption capacity was altered, increasing the ratio from 3—3.3 to 4.55. After the initial ammonium fluoride exchange, the 4.55 value was reduced to 3.7. However it is apparent that treatment with at least 1% fluoride on catalyst basis is needed to affect the alpha activity which can be reduced from 580 to 452 and 222 within the 1 and 2 wt.% F treatment, thus demonstrating the approach to controlled or optimized catalyst activity.

The examples presented in Table 8 serve to demonstrate that the ammonium fluoride treatment can be applied to a composited catalyst such as an extrudate containing 65% ammonium ZSM-5 and 35 wt.% alumina binder. The extruded catalyst was prepared by dry mixing the powdered ZSM-5 and powdered alpha aluminum monohydrate, adding sufficient water to make a plastic mass and then extruding the mass through a die containing the desired size holes. From the results presented in Table 8 it can be seen that the treated Examples 32 and 33 do have increased selectivity factors as measured by the ratio of n-hexane adsorption over cyclohexane. In these examples the ratios were 3.3 and 3.5 which should be compared to 2.2 for the starting calcined extrudate.

The data shown in Table 9, for Examples 34, 35 and 36 shows that the ammonium fluoride treatment can be used to modify both sodium and ammonium forms of ZSM-35 zeolite. In preparing Example 35, the sodium form of ZSM-35 was treated with 5 wt.% fluoride as an aqueous solution of ammonium fluoride. This treatment resulted in the increase in the selectivity ratio of 1.9 to 2.5. In a similar manner, a 2 wt.% treatment of an ammonium ZSM-35 zeolite increased the selectivity factor to 3.2. These treatments do not appear to be detrimental to the ZSM-35 as measured by either surface area of crystallinity.

Examples 37, 38 and 39 in Table 10 serve to demonstrate that the ammonium fluoride treatment at the 5 and 10 wt.% level of fluoride can be applied to ZSM-38. Here the selectivity ratio of n-hexane over cyclohexane adsorption increased from 1.6 to 1.9 and 2.5 for the treated ZSM-38.

It is to be understood that the ammonium fluoride treatment of this invention can be applied to other zeolites such as mordenite, offretite, ZSM-34, ZSM-21, ZSM-12, beta and alpha zeolites.

Use of this invention enables precise control over the shape selectivity of various pore zeolites. This is particularly desirable since it permits adjusting a catalyst to its optimum performance in a particular process.

It is observed from the above results that the present method is also highly useful for adjusting acid catalytic activity of crystalline zeolites, including those having a silica-to-alumina mole ratio greater than 8, which have, in turn, been impregnated with an ammonium fluoride solution, contacted with a warm aqueous solution of an ammonium salt, and calcined.

TABLE 1
$NH_4F$ Treatment of various forms of ZSM-5
(2—5 µm crystal size)

| Example No. | 1 | 2 | 3 | 4 | 5 | 6 |
|---|---|---|---|---|---|---|
| Zeolite | | | | | | |
| Type | ZSM-5 | ZSM-5 | ZSM-5 | ZSM-5 | ZSM-5 | ZSM-5 |
| Form | Na | Na | Na | $NH_4$ | Low Na | Low Na |
| Pretreatment | | | | | | |
| Time, Hrs. | 10 | 10 | 10 | 10 | 10 | 10 |
| Temp., °C | 540 | 540 | 540 | 540 | 540 | 540 |
| Atmosphere | Air | Air | Air | Air | Air | Air |
| $NH_4F$ Treatment | | | | | | |
| Wt.% F | 0 | 5 | 6 | 6 | 0 | 5 |
| Solution | | Aqueous | Aqueous | Aqueous | | Aqueous |
| Status | | Pores Filled | Pores Filled | Pores Filled | | Pores Filled |
| Time, Hrs. | | 24 | 24 | 24 | | 24 |
| Temp., °C | | 88—93 | 88—93 | 88—93 | | 88—93 |
| Processing | | | | | | |
| Wash | | Water | Water | Water | | Water |
| Dry | | 110°C | 110°C | 110°C | | 110°C |
| Calcine | | | | | | |
| Time, Hrs. | | 10 | 10 | 10 | | 10 |
| Temp., °C | | 540 | 540 | 540 | | 540 |
| Atmosphere | | Air | Air | Air | | Air |
| Properties | | | | | | |
| Surf. Area $m^2/g$ | 355 386 | 307 | 348 | | 356 369 | 328 |
| Sorption Wt.% | | | | | | |
| $H_2O$ | 10.2 7.6 | 1.6 | 1.1 | | 8.3 5.7 | 1.3 |
| Cyclohexane | 3.6 4.2 | 1.5 | 1.1 | 2.4 | 4.0 4.8 | 2.7 |
| n-hexane | 11.9 12.8 | 10.4 | 11.4 | 10.7 | 11.9 12.1 | 11.1 |
| $NC_6/cyC_6$ ratio | 3.05 3.0 | 6.9 | 10.4 | 4.5 | 2.5 2.5 | 4.1 |
| x-ray % ZSM-5 | 100 | 50 | | | 80 85 | 40 |
| Properties: After $NH_4Cl$ exchange, dried sample, water wash, dried and calcined at 540°C for 10 hours | | | | | | |
| Surf. Area $m^2/g$ | | 356 | 348 | | | |
| Sorption Wt.% | | | | | | |
| $H_2O$ | | 4.4 | 4.0 | | | 4.7 |
| cyclohexane | | 2.6 | 2.4 | | | 4.0 |
| n-hexane | | 11.4 | 12.1 | | | 11.6 |
| $NC_6cyC_6$ ratio | | 5.2 | 5.0 | | | 2.9 |
| alpha | 583 | 393 | 173 | | | 210 |
| x-ray % ZSM-5 | | | 75 | | | 60 |

TABLE 2
$NH_4F$ Treatment of various forms of ZSM-5
(Crystal size=0.02—0.05 μm)

| Example No. | 7 | 8 |
|---|---|---|
| Zeolite | | |
| Type | ZSM-5 | ZSM-5 |
| Form | Na | Na |
| Pretreatment | | |
| Time, Hrs. | | 10 |
| Temp., °C | | 540 |
| Atmosphere | | Air |
| $NH_4F$ Treatment | | |
| Wt.% F | | 5 |
| Solution | | Aqueous |
| Status | | Pores |
| | Filled | |
| Time, Hrs. | | 24 |
| Temp., °C | | 88—93 |
| Processing | | |
| Wash | | Water |
| Dry | | 110°C |
| Calcine | | |
| Time, Hrs. | | 10 |
| Temp., °C | | 540 |
| Atmosphere | | Air |
| Properties | | |
| Surf. Area $m^2/g$ | | |
| Sorption Wt.% | | |
| $H_2O$ | 5.3 | 2.8 |
| Cyclohexane | 5.3 | 5.0 |
| n-hexane | 10.5 | 10.5 |
| $NC_6/cyC_6$ ratio | 1.98 | 2.1 |
| x-ray % ZSM-5 | 100 | 70 |

Properties: After $NH_4Cl$ exchange, dried sample, water wash, dried and calcined at 540°C for 10 hours

| | | |
|---|---|---|
| Surf. Area $m^2/g$ | | 324 |
| Sorption Wt.% | | |
| $H_2O$ | | 3.2 |
| cyclohexane | | 4.6 |
| n-hexane | | 10.0 |
| $NC_6cyC_6$ ratio | | 2.2 |
| alpha | | 284 |

TABLE 3
Effect of varying $NH_4F$ concentrations on the zeolites

| Example No. | 1 | 9 | 10 | 11 |
|---|---|---|---|---|
| Zeolite | | | | |
| Type | ZSM-5 | ZSM-5 | ZSM-5 | ZSM-5 |
| Form | Na | Na | Na | $NH_4$ |
| Crystal Size (µm) | 2—5 | 2—5 | 2—5 | 2—5 |
| Preatment | | | | |
| Time, Hrs. | 10 | 10 | 10 | 10 |
| Temp., °C | 540 | 540 | 540 | 540 |
| Atmosphere | Air | Air | Air | Air |
| $NH_4F$ Treatment | | | | |
| Wt.% F | 0 | 5 | 10 | 20 |
| Solution | | Aqueous | Aqueous | Aqueous |
| Status | Filled | Pores Filled | Pores Filled | Pores |
| Time, Hrs. | | 24 | 24 | 24 |
| Temp., °C | | 88—93 | 88—93 | 88—93 |
| Processing | | | | |
| Wash | | Water | Water | Water |
| Dry | | 110°C | 110°C | 110°C |
| Calcine | | | | |
| Time, Hrs. | | 10 | 10 | 10 |
| Temp., °C | | 540 | 540 | 540 |
| Atmosphere | | Air | Air | Air |
| Properties | | | | |
| Surf. Area $m^2/g$ | 355 386 | 307 | 279 | 262 |
| Sorption Wt.% | | | | |
| $H_2O$ | 10.2 7.6 | 1.6 | 0.7 | 0.5 |
| Cyclohexane | 3.6 4.2 | 1.5 | 0.9 | 0.6 |
| n-hexane | 11.9 12.8 | 10.4 | 9.9 | 10 |
| $NC_6/cyC_6$ ratio | 3.05 3.0 | 6.9 | 11.0 | 16.7 |
| x-ray % | 100 | 50(1) | 60(2) | 55(3) |
| Properties: After $NH_4Cl$ exchange, dried sample, water wash, dried and calcined at 540°C for 10 hours | | | | |
| Surf. Area $m^2/g$ | | 356 | 356 | |
| Sorption Wt.% | | | | |
| $H_2O$ | | 4.4 | 4.7 | 5.2 |
| cyclohexane | | 2.6 | 2.4 | 2.1 |
| n-hexane | | 11.4 | 11.3 | 11.0 |
| $NC_6cyC_6$ ratio | | 5.2 | 5.0 | 5.0 |
| alpha | 393 | 393 | 259 | 370 |

(1) (2) (3) X-ray data show apparent interaction of $NH_4F$ with the ZSM-5 as evidenced by doublets at:

| | | |
|---|---|---|
| 24.5(1) | 24.6(2) | 24.6(3) |
| 25.1 | 25.1 | 27.0 |
| | 26.4 | 29.3 |

TABLE 4

| Example No. | 1 | 12 | 13 | 14 |
|---|---|---|---|---|
| **Zeolite** | | | | |
| Type | ZSM-5 | ZSM-5 | ZSM-5 | ZSM-5 |
| Form | Na | Na | Na | Na |
| Crystal size (μm) | 2—5 | 2—5 | 2—5 | 2—5 |
| **Preatment** | | | | |
| Time, Hrs. | 10 | 10 | 10 | 10 |
| Temp., °C | 540 | 540 | 540 | 540 |
| Atmosphere | Air | Air | Air | Air |
| **$NH_4F$ Treatment** | | | | |
| Wt.% F | | 2 | 4 | 6 |
| Solution | | | | |
| Status | | | | |
| Time, Hrs. | | | | |
| Temp., °F | | | | |
| **Processing** | | | | |
| Wash | | Water | Water | Water |
| Dry | | 110°C | 110°C | 110°C |
| Calcine | | | | |
| Time, Hrs. | | 10 | 10 | 10 |
| Temp., °C | | 540 | 540 | 540 |
| Atmosphere | | Air | Air | Air |
| **Properties** | | | | |
| Surf. Area $m^2/g$ | 355 386 | | | |
| Sorption Wt.% | | | | |
| $H_2O$ | 10.2 7.6 | 2.5 | 1.7 | 1.1 |
| Cyclohexane | 3.6 4.2 | 2.2 | 1.2 | 1.1 |
| n-hexane | 11.9 12.8 | 11.5 | 11.0 | 10.4 |
| $NC_6/cyC_6$ ratio | 3.05 3.0 | 5.2 | 9.2 | 10.4 |
| x-ray % | 100 | | | |
| Properties: After $NH_4Cl$ exchange, dried sample, water wash, dried and calcined at 540°C for 10 hours | | | | |
| Surf. Area $m^2/g$ | | 360 | 357 | 348 |
| Sorption Wt.% | | | | |
| $H_2O$ | | 4.7 | 4.1 | 4.0 |
| cyclohexane | | 2.8 | 2.4 | 2.4 |
| n-hexane | | 12.5 | 12.2 | 12.1 |
| $NC_6cyC_6$ ratio | | 4.5 | 5.1 | 5.0 |
| alpha | 583 | 278 | 213 | 173 |
| x-ray % ZSM-5 | 100 | 75 | 60 | 75 |

TABLE 5
Effect of varying $NH_4F$ concentrations on low sodium ZSM-5
(Crystal size 2—5 µm)

| Example No. | 1 | 15 | 16 | 17 |
|---|---|---|---|---|
| Zeolite | | | | |
| Type | ZSM-5 | ZSM-5 | ZSM-5 | ZSM-5 |
| Form | Low Na | Low Na | Low Na | Low Na |
| Pretreatment | | | | |
| Time, Hrs. | 10 | | | |
| Temp., °C | 540 | | | |
| Atmosphere | Air | | | |
| $NH_4F$ Treatment | | | | |
| Wt.% F | 0 | 5 | 10 | 20 |
| Solution | | Aqueous | Aqueous | Aqueous |
| Status | Filled | Pores Filled | Pores Filled | Pores |
| Time, Hrs. | | 24 | 24 | 24 |
| Temp., °C | | 88—93 | 88—93 | 88—93 |
| Processing | | | | |
| Wash | | Water | Water | Water |
| Dry | | 110°C | 110°C | 110°C |
| Calcine | | | | |
| Time, Hrs. | | 10 | 10 | 10 |
| Temp., °C | | 540 | 540 | 540 |
| Atmosphere | | Air | Air | Air |
| Properties | | | | |
| Surf. Area $m^2/g$ | 356 369 | 328 | 318 | 315 |
| Sorption Wt.% | | | | |
| $H_2O$ | 8.3 5.7 | 1.3 | 0.5 | 0.3 |
| Cyclohexane | 4.0 4.8 | 2.7 | 2.6 | 3.1 |
| n-hexane | 11.9 12.1 | 11.1 | 10.9 | 10.7 |
| $NC_6/cyC_6$ ratio | 2.52 2.5 | 4.1 | 4.2 | 3.5 |
| x-ray % ZSM-5 | 80 80 | 40(1) | 50(2) | 55(3) |
| Wt.% Na | 0.004 | 0.07 | 0.12 | 0.12 |
| Properties: After $NH_4Cl$ exchange, dried sample, water wash, dried and calcined at 540°C for 10 hours | | | | |
| Surf. Area $m^2/g$ | | — | 354 | — |
| Sorption Wt.% | | | | |
| $H_2O$ | | 4.7 | 4.6 | 4.7 |
| cyclohexane | | 4.0 | | 3.6 |
| n-hexane | | 11.6 | 11.4 | 11.3 |
| $NC_6cyC_6$ ratio | | 2.9 | | 3.1 |
| alpha | 436 | 210 | 202 | 203 |
| x-ray % ZSM-5 | | 60 | 70 | 60 |

(1)Doublets 19, 24.7, 27, 29.4, 48.8

(2)Doublets 24.7, 27, 29.5

(3)Doublets 24.6, 26.6, 29.3, 55.1

TABLE 6
$NH_4F$ treatment of NaZSM-5
(Crystal size 0.02—0.05 µm)
Effect of precalcination conditions

| Example No. | 18 | 19 | 20 | 21 |
|---|---|---|---|---|
| Zeolite | | | | |
| Type | ZSM-5 | ZSM-5 | ZSM-5 | ZSM-5 |
| Form | Na | Na | Na | Na |
| Pretreatment | | | | |
| Time, Hrs. | | 3 | 3 | 3 |
| Temp., °C | | 370 | 370 | 370 |
| Atmosphere | | $N_2$ | $N_2$ | $N_2$ |
| $NH_4F$ Treatment | | | | |
| Wt.% F | | 1 | 5 | 10 |
| Solution | | Aqueous | Aqueous | Aqueous |
| Status | | Pores | Pores | Pores |
| | Filled | Filled | Filled | |
| Time, Hrs. | | 24 | 24 | 24 |
| Temp., °C | | 82—93 | 82—93 | 82—93 |
| Processing | | | | |
| Wash | | | | |
| Dry | | 110°C | 110°C | 110°C |
| Calcine | | | | |
| Time, Hrs. | | 10 | 10 | 10 |
| Temp., °C | | 540 | 540 | 540 |
| Atmosphere | | Air | Air | Air |
| Properties | | | | |
| Surf. Area $m^2/g$ | | 314 | 305 | 299 |
| Sorption Wt.% | | | | |
| $H_2O$ | 5.3 | 4.4 | 3.1 | 11.3 |
| Cyclohexane | 5.3 | 5.6 | 5.4 | 10.7 |
| n-hexane | 10.5 | 11.3 | 5.3 | 10.3 |
| $NC_6/cyC_6$ ratio | 1.98 | 2.02 | 1.98 | 1.94 |
| x-ray % ZSM-5 | | | | |

TABLE 6 (contd.)
$NH_4F$ Treatment of NaZSM-5 (0.02—0.05 μm)
Effect of precalcination conditions

| Example No. | 22 | 23 | 24 | 25 | 26 | 27 |
|---|---|---|---|---|---|---|
| Zeolite | | | | | | |
| Type | ZSM-5 | ZSM-5 | ZSM-5 | ZSM-5 | ZSM-5 | ZSM-5 |
| Form | Na | Na | Na | Na | Na | Na |
| Pretreatment | | | | | | |
| Time, Hrs. | 10 | 10 | 10 | 10 | 10 | 10 |
| Temp., °C | 540 | 540 | 540 | 540 | 540 | 540 |
| Atmosphere | Air | Air | Air | Air | Air | Air |
| $NH_4F$ Treatment | | | | | | |
| Wt.% F | 1 | 5 | 10 | 2 | 5 | 10 |
| Solution | Aqueous | Aqueous | Aqueous | Aqueous | Aqueous | Aqueous |
| Status | Pores Filled | Pores Filled | Pores Filled | Pores Filled | Pores Filled | Pores Filled |
| *Time, Hrs. | 24 | 24 | 24 | 24 | 24 | 24 |
| Temp., °C | 82—93 | 82—93 | 82—93 | 88—93 | 88—93 | 88—93 |
| Processing | | | | | | |
| Wash | | | | Water | Water | Water |
| Dry | 110°C | 110°C | 110°C | 110°C | 110°C | 110°C |
| Calcine | | | | | | |
| Time, Hrs. | | 10 | 10 | 10 | 10 | 10 |
| Temp., °C | | 540 | 540 | 540 | 540 | 540 |
| Atmosphere | | Air | Air | Air | Air | Air |
| Properties | | | | | | |
| Surf. Area $m^2/g$ | 281 | 237 | 218 | 327 | 313 | 298 |
| Sorption Wt.% | | | | | | |
| $H_2O$ | 3.3 | 2.1 | 1.4 | 2.9 | 2.8 | 2.6 |
| Cyclohexane | 5.5 | 4.1 | 3.5 | 5.6 | 5.0 | 4.2 |
| n-hexane | 9.8 | 8.6 | 8.5 | 10.8 | 10.5 | 9.8 |
| $NC_6/cyC_6$ ratio | 1.78 | 2.10 | 2.42 | 1.92 | 2.1 | 2.33 |
| x-ray % ZSM-5 | | | | 70 | 70 | 65 |
| Properties: After $NH_4Cl$ exchange, dried sample, water wash, dried and calcined at 540°C for 10 hours | | | | | | |
| Surf. Area $m^2/g$ | | | | 344 | 324 | 296 |
| Sorption Wt.% | | | | | | |
| $H_2O$ | | | | 3.5 | 3.2 | 3.1 |
| cyclohexane | 4.6 | 2.8 | 2.0 | 5.5 | 4.6 | 4.0 |
| n-hexane | 10.5 | 9.0 | 8.7 | 10.9 | 10.0 | 9.4 |
| $NC_6cyC_6$ ratio | 2.3 | 3.2 | 4.4 | 1.98 | 2.17 | 2.35 |
| alpha | 106 | 17 | 4 | 296 | 284 | 279 |

*Approximate

TABLE 7

$NH_4F$ Treatment of ZSM-5 for control of alpha activity

(Crystal size 2—5 μm)

| Example No. | 1 | 28 (Comparative) | 29 | 30 |
|---|---|---|---|---|
| Zeolite | | | | |
| Type | ZSM-5 | ZSM-5 | ZSM-5 | ZSM-5 |
| Form | Na | Na | Na | Na |
| Pretreatment | | | | |
| Time, Hrs. | 10 | 10 | 10 | 10 |
| Temp., °C | 540 | 540 | 540 | 540 |
| Atmosphere | Air | Air | Air | Air |
| $NH_4F$ Treatment | | | | |
| Wt.% F | 0 | 0.5 | 1.0 | 2.0 |
| Solution | | Aqueous | Aqueous | Aqueous |
| Status | | Pores Filled | Pores Filled | Pores Filled |
| Time, Hrs. | | 24 | 24 | 24 |
| Temp., °C | | 110 | 110 | 110 |
| Processing | | | | |
| Wash | | | | |
| Dry | | | | |
| Calcine | | | | |
| Time, Hrs. | | 10 | 10 | 10 |
| Temp., °C | | 540 | 540 | 540 |
| Atmosphere | | Air | Air | Air |
| Properties | | | | |
| Surf. Area $m^2/g$ | 355 386 | 364 | 348 | 3.7 |
| Sorption Wt.% | | | | |
| $H_2O$ | 10.2 7.6 | 6.4 | 4.0 | 2.2 |
| Cyclohexane | 3.6 4.2 | 3.1 | 3.2 | 2.2 |
| n-hexane | 11.9 12.8 | 10.8 | 10.4 | 10.0 |
| $NC_6/cyC_6$ ratio | 3.05 3.0 | 3.48 | 3.3 | 4.55 |
| x-ray % ZSM-5 | 100 | 75 | 75 | 65(1) |
| Properties: After $NH_4Cl$ exchange, dried sample, water wash, dried and calcined at 540°C for 10 hours | | | | |
| Surf. Area $m^2/g$ | | 389 | 385 | 358 |
| Sorption Wt.% | | | | |
| $H_2O$ | | 6.9 | 6.0 | 5.0 |
| cyclohexane | | 4.7 | 4.5 | 3.2 |
| n-hexane | | 12.5 | 12.3 | 11.7 |
| $NC_6cyC_6$ ratio | | 2.7 | 2.7 | 3.7 |
| alpha | 583 | 588(2) | 452(2) | 222(2) |
| x-ray % ZSM-5 | | 80 | 80 | 90 |

(1)Doublets at 18.1, 24.7, 27.2, 29.5

(2)Residual sodium 0.08

TABLE 8
$NH_4F$ Treatment of composite catalyst on extrudate
(65% ZSM-5; 35% $Al_2O_3$)

| Example No. | 31 | 32 | 33 |
|---|---|---|---|
| Zeolite | | | |
| Type | ZSM-5 | ZSM-5 | ZSM-5 |
| Form | $NH_4$ | $NH_4$ | $NH_4$ |
| Pretreatment | | | |
| Time, Hrs. | 10 | 10 | 10 |
| Temp., °C | 540 | 540 | 540 |
| Atmosphere | Air | Air | Air |
| $NH_4F$ Treatment | | | |
| Wt.% F | 0 | 2 | 10 |
| Solution | | Aqueous | Aqueous |
| Status | | Pores Filled | Pores Filled |
| Time, Hrs. | | 24 | 24 |
| Temp., °C | | 110 | 82—93 |
| Processing | | | |
| Wash | | | Water |
| Dry | | 110°C | 110°C |
| Calcine | | | |
| Time, Hrs. | | 10 | 10 |
| Temp., °C | | 540 | 540 |
| Atmosphere | | Air | Air |
| Properties | | | |
| Surf. Area $m^2/g$ | | 307 | 276 |
| Sorption Wt.% | | | |
| $H_2O$ | 10.6 | 9.6 | 11.1 |
| Cyclohexane | 4.9 | 2.9 | 2.4 |
| n-hexane | 10.7 | 9.6 | 8.4 |
| $NC_6/cyC_6$ ratio | 2.2 | 3.3 | 3.5 |
| x-ray % ZSM-5 | 65 | 45 | 55 |
| Alpha | 286 | 63 | 10 |

Properties: After $NH_4Cl$ exchange, dried sample, water wash, dried and calcined at 540°C for 10 hours

| | | | |
|---|---|---|---|
| Surf. Area $m^2/g$ | | | 355 |
| Sorption Wt.% | | | |
| $H_2O$ | | | 15.9 |
| cyclohexane | | | 3.2 |
| n-hexane | | | 9.4 |
| $NC_6cyC_6$ ratio | | | 2.9 |
| alpha | | | 469 |
| x-ray % ZSM-5 | | | 50 |

TABLE 9
$NH_4F$ Treatment of a ZSM-35

| Example No. | 34 | 35 | 36 |
|---|---|---|---|
| Zeolite | | | |
| Type | ZSM-35 | ZSM-35 | ZSM-35 |
| Form | Na | Na | $NH_4$ |
| Pretreatment | | | |
| Time, Hrs. | 10 | 10 | 10 |
| Temp., °C | 540 | 540 | 540 |
| Atmosphere | Air | Air | Air |
| $NH_4F$ Treatment | | | |
| Wt.% F | 0 | 5 | 2 |
| Solution | | Aqueous | Aqueous |
| Status | | Pores Filled | Pores Filled |
| Time, Hrs. | | 24 | 24 |
| Temp., °C | | 93 | 93 |
| Processing | | | |
| Wash | | Water | Water |
| Dry | | 110°C | 110°C |
| Calcine | | | |
| Time, Hrs. | | 10 | 10 |
| Temp., °C | | 540 | 540 |
| Atmosphere | | Air | Air |
| Properties | | | |
| Surf. Area $m^2/g$ | 320 | 344 | 301 |
| Sorption Wt.% | | | |
| $H_2O$ | | | |
| Cyclohexane | 4.9 | 3.4 | 2.3 |
| n-hexane | 9.4 | 8.4 | 7.3 |
| $NC_6/cyC_6$ ratio | 1.92 | 2.5 | 3.2 |
| x-ray % ZSM-35 | | 105 | |

TABLE 10
$NH_4$ Treatment of ZSM-38

| Example No. | 37 | 38 | 39 |
|---|---|---|---|
| Zeolite | | | |
| Type | ZSM-38 | ZSM-38 | ZSM-38 |
| Form | Na | Na | Na |
| Pretreatment | | | |
| Time, Hrs. | | 10 | 10 |
| Temp., °C | | 540 | 540 |
| Atmosphere | | Air | Air |
| $NH_4F$ Treatment | | | |
| Wt.% F | | 5 | 10 |
| Solution | | Aqueous | Aqueous |
| Status | | Pores Filled | Pores Filled |
| Time, Hrs. | | 24 | 24 |
| Temp., °C | | 93 | 93 |
| Processing | | | |
| Wash | | Water | Water |
| Dry | | 110°C | 110°C |
| Calcine | | | |
| Time, Hrs. | | 10 | 10 |
| Temp., °C | | 540 | 540 |
| Atmosphere | | Air | Air |
| Properties | | | |
| Surf. Area $m^2/g$ | 410 | 352 | 337 |
| Sorption Wt.% | | | |
| $H_2O$ | | | |
| Cyclohexane | 5.3 | 4.6 | 3.2 |
| n-hexane | 8.6 | 8.7 | 8.1 |
| $NC_6/cyC_6$ ratio | 1.6 | 1.9 | 2.5 |
| x-ray % ZSM-38 | | 100 | 90 |
| Properties: After $NH_4Cl$ exchange, dried sample, water wash, dried and calcined treated | | | |
| Surf. Area $m^2/g$ | | 375 | |
| Sorption Wt.% | | | |
| $H_2O$ | | | |
| cyclohexane | | 3.8 | |
| n-hexane | | 7.7 | |
| $NC_6cyC_6$ ratio | | 2.0 | |
| alpha | | | |
| x-ray % ZSM-38 | | 100 | |

**Claims**

1. A method for enhancing the shape selectivity of a porous crystalline zeolite which comprises:

(a) impregnating the zeolite with an aqueous solution of ammonium fluoride to provide a concentration of fluoride in the resultant zeolite composition which is the equivalent of at least 1% by weight of elemental fluorine; and

(b) converting the fluoride-treated zeolite to the hydrogen form.

2. A method according to claim 1, wherein the impregnation step is conducted at 0—150°C.

3. A method according to claim 1 or claim 2, wherein the zeolite has a silica-to-alumina mole ratio greater than 10.

4. A method according to claim 1 or claim 2, wherein said zeolite has a silica-to-alumina mole ratio greater than about 100.

5. A method according to claim 1 or claim 2, wherein said zeolite has a silica-to-alumina mole ratio greater than 500.

6. A method according to any one of claims 1 to 5, wherein said zeolite is ZSM-5, ZSM-11, ZSM-12, ZSM-23, ZSM-35, ZSM-38, ZSM-48 or zeolite beta.

7. A method according to any preceding claim, wherein the impregnation is conducted in the absence of an external source of aluminum.

8. A method according to any preceding claim, wherein prior to step (a) the zeolite is calcined in an oxygen-containing gas to remove carbonaceous material.

9. A method according to any preceding claim, wherein the concentration of fluoride is the equivalent of from 1.0 to 20% by weight of elemental fluorine.

10. A method according to any preceding claim, wherein the starting zeolite has an alpha value greater than 100 and the resultant zeolite has an alpha value less than 10.

11. A method according to any preceding claim, wherein the starting zeolite has an alpha value greater than 500 and the resultant zeolite has an alpha value less than 400.

12. A process for cracking a hydrocarbon feedstock which process comprises contacting the hydrocarbon feedstock under hydrocarbon cracking conditions with a catalyst comprising a porous crystalline zeolite treated by a method according to any preceding claim.

**Patentansprüche**

1. Verfahren zur Verbesserung der Formselektivität eines porösen kristallinen Zeoliths, bei welchem Verfahren:

(a) der Zeolith mit einer wässerigen Ammoniumfluoridlösung imprägniert wird, um in der entstehenden Zeolithzusammensetzung eine Fluoridkonzentration zu schaffen, die zumindest 1 Gew.% elementarem Fluor äquivalent ist; und

(b) der Fluorid-behandelte Zeolith in die Wasserstofform übergeführt wird.

2. Verfahren nach Anspruch 1, bei welchem die Imprägnierungsstufe bei 0 bis 150°C durchgeführt wird.

3. Verfahren nach Anspruch 1 oder 2, bei welchem der Zeolith ein Molverhältnis von Siliziumoxid zu Aluminiumoxid von größer als 10 aufweist.

4. Verfahren nach Anspruch 1 oder 2, bei welchem der Zeolith ein Molverhältnis von Siliziumoxid zu Aluminiumoxid von mehr als etwa 100 aufweist.

5. Verfahren nach Anspruch 1 oder 2, bei welchem der Zeolith ein Molverhältnis von Siliziumoxid zu Aluminiumoxid von mehr als 500 aufweist.

6. Verfahren nach irgendeinem der Ansprüche 1 bis 5, bei welchem der Zeolith ein ZSM-5, ZSM-11, ZSM-12, ZSM-23, ZSM-35, ZSM-38, ZSM-48 oder ein Zeolith Beta ist.

7. Verfahren nach irgendeinem der vorhergehenden Ansprüche, bei welchem die Imprägnierung in Abwesenheit einer äußeren Aluminiumquelle vorgenommen wird.

8. Verfahren nach irgendeinem der vorhergehenden Ansprüche, bei welchem vor der Stufe (a) der Zeolith in einem sauerstoffhältigen Gas zur Entfernung von kohlenstoffhaltigem Material kalziniert wird.

9. Verfahren nach irgendeinem der vorhergehenden Ansprüche, bei welchem die Fluoridkonzentration äquivalent 1,0 bis 20 Gew.% elementarem Fluor ist.

10. Verfahren nach irgendeinem der vorhergehenden Ansprüche, bei welchem der Ausgangszeolith einen α-Wert von mehr als 100 und der entstehende Zeolith einen α-Wert von weniger als 10 aufweist.

11. Verfahren nach irgendeinem der vorhergehenden Ansprüche, bei welchem der Ausgangszeolith einen α-Wert von mehr als 500 und der entstehende Zeolith einen α-Wert von weniger als 400 aufweist.

12. Verfahren zur Crackung eines Kohlenwasserstoffausgangsmaterials, bei welchem Verfahren des Kohlenwasserstoffausgangsmaterial unter Kohlenwasserstoffcrackbedingungen mit einem Katalysator in Kontakt gebracht wird, der einen porösen kristallinen Zeolith enthält, der nach einem Verfahren gemäß irgendeinem der vorhergehenden Ansprüche behandelt worden ist.

**Revendications**

1. Un procédé pour augmenter la sélectivité quant à la forme d'une zéolite cristalline, caractérisé en ce qu'il comprend:

a) l'imprégnation de la zéolite avec une solution aqueuse de fluorure d'ammonium pour fournir une concentration de fluorure dans la composition de zéolite résultante qui est l'équivalent d'au moins 1% en poids de fluor élémentaire, et

b) la conversion de la zéolite traitée par le fluorure en la forme protonée.

2. Un procédé suivant la revendication 1, caractérisé en ce que l'étape d'imprégnation est réalisée à 0—150°C.

3. Un procédé suivant la revendication 1 ou la revendication 2, caractérisé en ce que la zéolite a un rapport molaire silice à alumine supérieur à 10.

4. Un procédé suivant la revendication 1 ou la revendication 2, caractérisé en ce que la zéolite a un rapport molaire silice à alumine supérieur à 100.

5. Un procédé suivant la revendication 1 ou la revendication 2, caractérisé en ce que la zéolite a un rapport molaire silice à alumine supérieur à 500.

6. Un procédé suivant l'une quelconque des revendications 1 à 5, caractérisé en ce que cette zéolite est

une ZSM-5, une ZSM-11, une ZSM-12, une ZSM-23, une ZSM-35, une ZSM-38, une ZSM-48 ou une zéolite béta.

7. Un procédé suivant l'une quelconque des revendications 1 à 6, caractérisé en ce que l'imprégnation est conduite en l'absence d'une source externe d'aluminium.

8. Un procédé suivant l'une quelconque des revendications 1 à 7, caractérisé en ce qu'avant l'étape (a), la zéolite est calcinée dans un gaz contenant de l'oxygène pour éliminer la matière carbonée.

9. Un procédé suivant l'une quelconque des revendications 1 à 8, caractérisé en ce que la concentration du fluorure est l'équivalent de 1,0 à 20% en poids de fluor élémentaire.

10. Un procédé suivant l'une quelconque des revendications 1 à 9, caractérisé en ce que la zéolite de départ a une valeur alpha supérieure à 100 et que la zéolite résultante a une valeur alpha inférieure à 10.

11. Un procédé suivant l'une quelconque des revendications 1 à 10, caractérisé en ce que la zéolite de départ a une valeur alpha supérieure à 500 et que la zéolite résultante a une valeur alpha inférieure à 400.

12. Un procédé pour le craquage d'une charge d'alimentation hydrocarbonée, caractérisé en ce qu'il comprend la mise en contact de la charge d'alimentation hydrocarbonée dans des conditions de craquage d'hydrocarbures avec un catalyseur comprenant une zéolite cristalline poreuse traitée selon un procédé suivant l'une quelconque des revendications précédentes.